# EUROPEAN PATENT APPLICATION

(11) **EP 2 892 019 A1**
(43) Date of publication of application: **08.07.2015**
(21) Application number: 14198886.5
(22) Date of filing: 18.12.2014
(51) Int. Cl.: G06Q 30/02

(54) **Using financial visualization analysis for gaining insights from cellular signaling and device holders data**

(30) Priority: 02.01.2014 IL 23030214
(71) Applicant: Deutsche Telekom AG, 53113 Bonn (DE)
(72) Inventor: Mimran, David, Tel Aviv (IL); Chizi, Barak, Ashkelon (IL); Elovici, Yuval, Ashkelon (IL)
(74) Representative: Weickmann & Weickmann

(57) **Abstract**

The invention is a system for analyzing and displaying results of the analyses of the large amounts of data related to the locations of the users of mobile communication devices available from the devices in a way that can be immediately useful as a decision making tool to a business by yielding actionable insights from the data.

## Description

### Field of the Invention

The invention is from the field of mobile communications. Particularly the invention relates to a method of making practical use of the large amount of data that can be obtained from the mobile communication devices used by individuals.

### Background of the Invention

Today the vast majority of persons alive on the earth use on a daily basis some form of mobile communication device, e.g. a cellular phone, a PDA, a laptop or notebook computer. Each of these individual devices generates a large amount of data, e.g. signaling data, positioning data, and data related to the device usage and the pattern of use. This information as well as personal information, e.g. age, sex, place of residence, and occupation, of the users of these devices is available to the mobile communication service providers and in some cases is made available to outside organizations.

Financial visualization analysis is a tool enabling the user to gain information that provides actionable insights for a business out of a large amount of data.

It is a purpose of the present invention to adapt the techniques and the methodologies of financial visualization analysis to the telecommunication domain providing a method of analysis of the large amount of data available to provide immediate actionable insights for any business which requires knowledge about its customers or potential customers.

Further purposes and advantages of this invention will appear as the description proceeds.

### Summary of the Invention

The invention is a system for analyzing and displaying results of the analyses of the large amount of data related to the locations of the users of mobile communication devices that is available from the devices. The results are displayed in a way that can be immediately useful as a decision making tool to a business by yielding actionable insights from the data. The system comprises:
a. components of a service provider's network;
b. a system processor; and
c. a customer's work station.

The components of the service provider's network are configured to collect and store location data from user's mobile devices in the service provider's data storage facility.

The system processor is configured to:
a. receive queries and other relevant information from the customer;
b. extract location data from the service provider's data storage facility in order to determine the value of the customer's portfolio;
c. extract data from other data bases as required to combine with the value of the customer's portfolio in order to prepare responses to the customer's queries;
d. prepare responses to the customer's queries; and
e. send responses to the customers in a format that enables them to be displayed according to the customer's request.

The customer's work station is configured to allow the customer to:
a. define the portfolio, wherein defining the portfolio comprises inputting a list of points of interest (POIs) and their locations;
b. define the time period in which the customer wants the value of his portfolio to be determined;
c. define the query or queries that the customer wants answered;
d. define how the responses to his queries should be graphically displayed.

In embodiments of the invention the system processor can be a separate machine controlled by a separate entity that provides a link between the mobile service provider and the customer, a component of the service provider's network, or a component of the customer's work station.

In embodiments of the invention the system processor prepares responses to the queries from a customer and sends them to the customer's work station where the responses are displayed in the form of graphs or tables.

All the above and other characteristics and advantages of the invention will be further understood through the following illustrative and non-limitative description of embodiments thereof, with reference to the appended drawings.

### Brief Description of the Drawings

- Fig. 1 schematically shows a typical visual report produced by the Live Portfolio Uptake Module of the invention;
- Fig. 2 is a bar graph showing the value of a portfolio for each hour of a day;
- Fig. 3 is a typical report created by the Mover/Shaker Analysis Module;
- Fig. 4 shows a typical report generated by the Time Variant Trend Analysis Module of the invention.

### Detailed Description of Embodiments of the Invention

The present invention is a system for analyzing and displaying results of the analyses of the large amounts of data related to the locations of the users of mobile communication devices available from the devices in a way that can be immediately useful as a decision making tool to a business by yielding actionable insights from the data.

The major difficulty is the sheer size of the amount of data that is collectively generated by all of the users obtaining their mobile communication services in a given geographical area such as a city or country. Quantities of data of the size dealt with by the method of the invention are known by the term "big data", which is defined in Wikipedia as "the term for a collection of data sets so large and complex that it becomes difficult to process using on-hand database management tools or traditional data processing applications".

The invention uses an exploration approach to dealing with the big data. That is the components of the system are configured to arrange and display the data in a certain way and during the arrangement to learn pre-requested things about the data. The content of the visual displays is specific to a particular business and to the information that the owners want to obtain from the data; however the basic process follows the outline described herein.

To prevent confusion the following terms are defined as follows herein:
- A "device" is a mobile communication device.
- A "user" is a person carrying a device.
- A "customer" or an "owner" is a person who submits queries to the system of the invention.

The invention can be used to provide visual information to a wide variety of businesses. One example is an outdoor advertising business comprised of a large number of billboards located along the sides of roads and highways in and out of cities. Other examples are chains comprised of large numbers of fast food establishments, hardware stores, or gas stations. The owner of the advertising agency might want to know how many persons pass each of his billboards at certain times or during certain periods of time. The managers of the chains of establishments might want to know what proportion of the people that pass each of their stores actually enters the establishment.

The invention *per se* is not directly related to the field of business or finance. However, because it is anticipated that the users of the invention will be primary businesses who employ it to make financial decisions based on the information provided, terminology from the fields of business and finance is used herein.

For example:
- The term "portfolio" is used herein to refer to the group of points of interest (POI), i.e. locations, at which the customer wants to acquire information. It is noted that as used herein the term POI refers to an area whose size and location is predefined for each case. For example, a POI can be a geographical area having recognized borders such as a country or it can be the area within a circle having a radius of 100m centered at a specific address.
   To illustrate the concept, the portfolio of an advertising company could comprise a list of the locations of all of their billboards in the country. A different portfolio would contain all locations in a specific city, etc.
- The "participants" in a portfolio are the individual POIs that make up the folio.
- The "value" of a portfolio is related to the number of mobile device users that move around the points of interest that make up the portfolio, i.e. the sum of the participants in each POI.

The system of the invention gathers data relating to the activity of all users on the mobile networks in the geographical area covered by the portfolio. It analyzes the data in order to respond to queries of the customers and presents all information in a graphical form that is easily interpreted by them and enables them to explore it. In general the customer will only have direct access to data collected from the network of his mobile communications services provider. However, by use of a method described in a co-pending patent application IL 229393 of the Applicant of this application, it is possible to determine the market share of the customer's provider and from this to determine the activity of the users from all service providers that are active in the POI.

The system of the invention is comprised of three entities that are in communication with each other to produce the desired reports for the customers. These are:
1. Components of a service provider's network that are configured to collect and store location data from user's mobile devices in the service provider's data storage facility.
2. A system processor configured to:
   a. receive queries and other relevant information from customers;
   b. extract location data from the service provider's data storage facility in order to determine the value of the customer's portfolio;
   c. extract data from other data bases as required to combine with the value of the customer's portfolio in order to prepare responses to customer's queries;
   d. prepare responses to customer's queries; and
   e. send responses to customers in a format that enables them to be displayed according to the customer's request.
3. A customer's work station configured to allow the customer to:
   a. define the portfolio, i.e. input a list of POIs and their locations;
   b. define the time period in which the customer wants the value of his portfolio to be determined;
   c. define the query or queries that the customer wants answered;
   d. define how the responses, i.e. answers, to his queries should be graphically displayed.

The final architecture of the implementation can take different forms. That is the system processor could be a separate machine controlled by a separate entity that provides a link between the mobile service provider and the customer, or it could be a component of the service provider's network or in a third embodiment it could be a component of the customer's work station.

The input means of the customer's work station can be configured to allow him/her to either input information such as the contents of the portfolio or time period of interest and queries *ad hoc* or he/she can request predetermined standard reports of different types, for example from drop down menus on a touch screen.

The primary inputs to the system processor are the queries of the customer and the signaling/communication data stored in the data storage facility of the mobile communication services provider. The exact computational steps executed by the system processor are tailored to the exact queries asked but the basic principle can be understood from the following examples.

The invention will now be described in terms of the specific example of the managers of an advertising company who have input four different queries into the system. Conceptually the system processor can be most easily understood by considering it to comprise four modules each of which independently executes the steps required to respond to one of the queries and to provide the response in the form of a visual report to the customer. This is obviously an oversimplification since much of the processor's task, especially determining the value of the defined portfolios, provides information that is used by all modules. Nonetheless, it is useful for illustrative purposes to visualize the processor treating each query as a separate problem that has to be solved from the beginning independently of all other queries that it has been asked to respond to by the same customer.

The four modules for these examples take their names from the information in the reports that they generate. They are:
1. Live Portfolio Uptake
2. Portfolio Overall
3. Mover/Shaker Analysis
4. Time Variant Trend Analysis

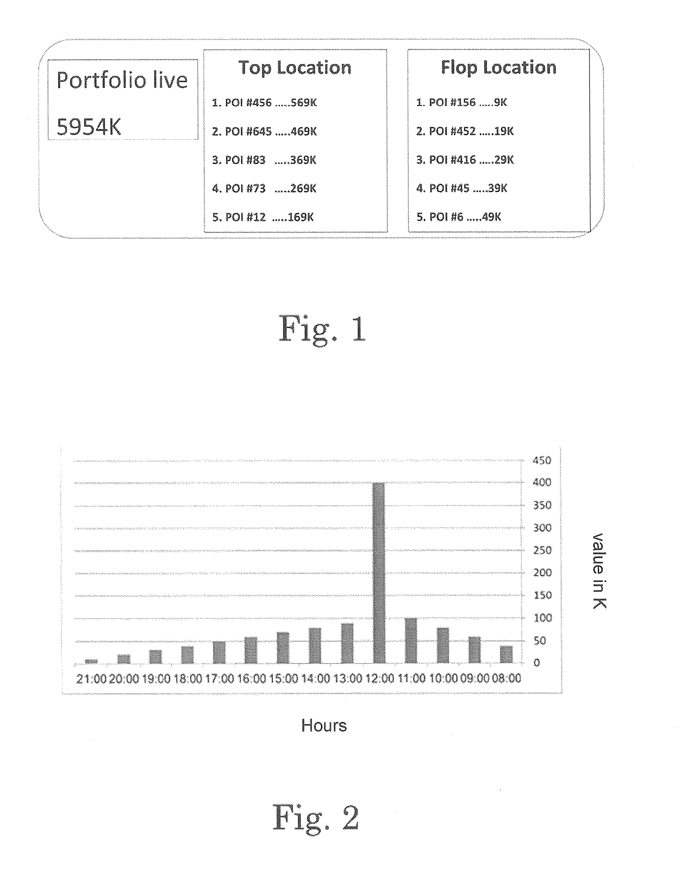

Fig. 1 schematically shows a typical visual report produced by the Live Portfolio Uptake Module. In this example the portfolio is the list of the locations of all billboards in a given geographical area that are owned by an advertising company. The value of the portfolio is the number of mobile device users that are presently passing through each of the locations in the portfolio and are theoretically looking at the billboard at that location and the query posed by the customer is: "What is the instantaneous value of my portfolio, which consists of all of my billboards in the country?" A secondary query, whose response can be extracted from the same data, is: "What are the POIs of the five most visited and five least visited sites?"

In the example of Fig. 1 the value of the portfolio is 5,954,000 persons. The arrow pointing upward next to the value indicates that the number of visitors to the entire portfolio is presently increasing. Also shown in this display is the response to the secondary query - the five most visited (top locations) and the five least visited (flop locations) sites and the number of persons that are currently passing by those billboards, i.e. the value of the portfolios that comprise each individual POI.

The Portfolio Overall Module responds to a request by the customer to see an aggregative representation of his portfolio along a timeline. The representation can be filtered by any date range, tuned for any time aggregation, and presented in a number of forms, e.g. line graph, pie graph and bar graph. For example Fig. 2 is a bar graph showing the value of the portfolio for each hour of a selected day beginning at 08:00 in the morning and ending at 21:00 in the evening.

The Mover/Shaker Analysis Module provides a benchmark look about the point of interests within the portfolio. This is a response to a query asking the system to compare the properties of different billboards. This is done by sketching a two dimensional matrix of two chosen properties of the data. By positioning the point of interest representing each of the billboards to be compared on this matrix, the customer can compare each of the POIs in relation to the other POIs in the portfolio. This enables the user to benchmark the points based on different parameters.

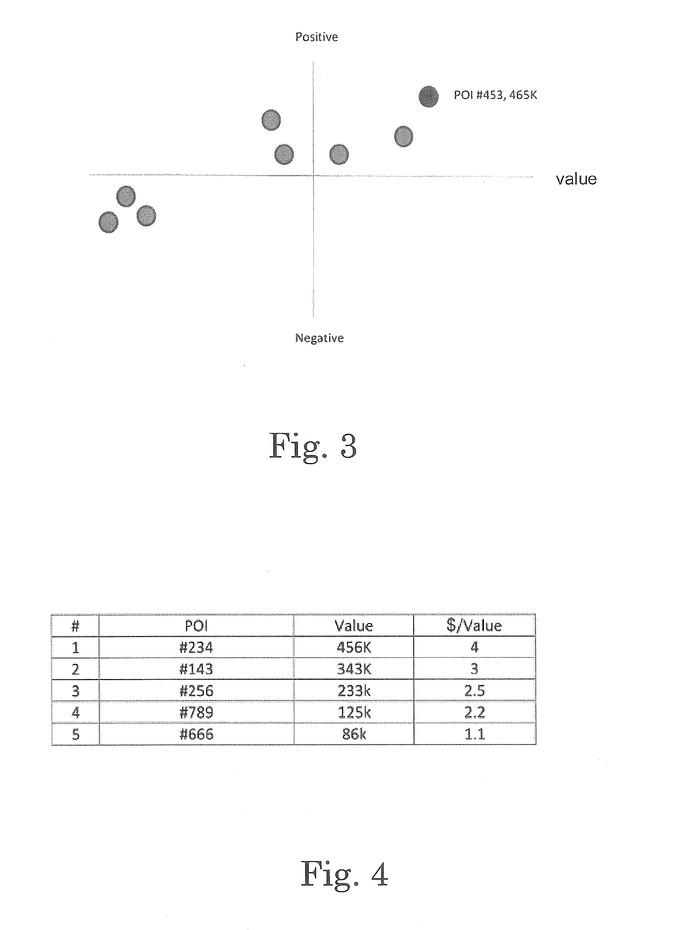

Fig. 3 is a typical report created by the Mover/Shaker Analysis Module. In the figure the horizontal axis represents the number of visitors, i.e. the value of the portfolio for the POI, and the vertical direction can includes the following types of properties: (a) discrete, for example, the kind of district e.g. commercial or residential, in which the POIs are located (in these cases there are no positive or negative values); and (b) properties that can have continuous values such as in the case illustrated in Fig. 3 wherein the vertical axis represents the relative size of the billboard compared to a standard size.

The Time Variant Trend Analysis Module supplies full ranked lists of the values of the portfolio and other information that is of interest to the owner of the portfolio. For example, the economic value over a chosen time period and a view of the distribution over past periods.

Fig. 4 shows a typical report generated by the Time Variant Trend Analysis Module. The report shown in Fig. 4 shows five of the billboards placed by the agency at different locations, the value, i.e. the number of persons that have passed by the billboard, in the previous month, and the monthly revenue that the billboard has generated over the past month per visitor. In order to generate this report, the system processor has to have access to financial data in the customer's data base as well as access to the service provider's data storage facility.

Although embodiments of the invention have been described by way of illustration, it will be understood that the invention may be carried out with many variations, modifications, and adaptations, without exceeding the scope of the claims.

The invention is a system for analyzing and displaying results of the analyses of the large amounts of data related to the locations of the users of mobile communication devices available from the devices in a way that can be immediately useful as a decision making tool to a business by yielding actionable insights from the data.

## Claims

1. A system for analyzing and displaying results of the analyses of the large amounts of data related to the locations of the users of mobile communication devices available from the devices in a way that can be immediately useful as a decision making tool to a business by yielding actionable insights from the data, the system comprising:
a. components of a service provider's network;
b. a system processor; and
c. a customer's work station.

2. The system of claim 1, wherein the components of the service provider's network are configured to collect and store location data from user's mobile devices in the service provider's data storage facility.

3. The system of claim 1, wherein the system processor is configured to:
a. receive queries and other relevant information from the customer;
b. extract location data from the service provider's data storage facility in order to determine the value of the customer's portfolio;
c. extract data from other data bases as required to combine with the value of the customer's portfolio in order to prepare responses to the customer's queries;
d. prepare responses to the customer's queries; and
e. send responses to the customers in a format that enables them to be displayed according to the customer's request.

4. The system of claim 1, wherein the customer's work station is configured to allow the customer to:
a. define the portfolio;
b. define the time period in which the customer wants the value of his portfolio to be determined;
c. define the query or queries that the customer wants answered;
d. define how the responses to his queries should be graphically displayed.

5. The system of claim 4, wherein defining the portfolio comprises inputting a list of points of interest (POIs) and their locations.

6. The system of claim 1, wherein the system processor is a separate machine controlled by a separate entity that provides a link between the mobile service provider and the customer.

7. The system of claim 1, wherein the system processor is a component of the service provider's network.

8. The system of claim 1, wherein the system processor is a component of the customer's work station.

9. The system of claim 1, wherein the system processor prepares responses to the queries from a customer and sends them to the customer's work station where the responses are displayed in the form of graphs or tables.
